# EUROPEAN PATENT APPLICATION

(11) **EP 1 028 546 A1**
(43) Date of publication of application: **16.08.2000**
(21) Application number: 99300977.8
(22) Date of filing: 10.02.1999
(51) Int. Cl.: H04B 7/185, H04B 1/12

(54) **Communications apparatus and method**

(71) Applicant: ICO Services Ltd., London W6 9BN (GB)
(72) Inventor: Singarajah, Anselm Jeyakumar, Carshalton-Beeches, Surrey SM5 3LW (GB); Wyrwas, Richard, Southgate, London N14 6LN (GB); Mclean, Andrew Neil, Wimbledon, London SW19 8NS (GB)
(74) Representative: Musker, David Charles

(57) **Abstract**

A method of mitigating interference in a satellite user uplink signal of a satellite mobile communications system comprising: providing a plurality of first periods within which the user terminal transmissions are in predetermined states; measuring said uplink signal during said periods; and using said measurements from said first periods to mitigate said interference during second periods within which the user terminal transmissions are not in said predetermined states. The predetermined states may be unused or dedicated vacant timeslots of a TDMA carrier.

## Description

### FIELD OF THE INVENTION

This invention relates to communications with a user, and particularly to such communications in which the link to the user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Because of the altitude of the satellites, the distance travelled by a signal from the user terminal to the satellite, and from the satellite to the Earth station, is much longer than the distance between a terrestrial user terminal and its local based station. According, the attenuation undergone by the signal is substantially higher.

In the user terminal uplink direction, the power available from some times of terminal (such as handsets) is very limited, and the gain of the antennas may be very low. As the satellite has somewhat higher power, the signal strength on the user downlink is somewhat larger. In the feeder link between the Earth station and the satellite, more power and higher gain antennas are available. Accordingly, the user terminal uplink is, in many cases, the link on which the signal is most susceptible to interference.

In addition to the thermal noise radiated by the planet on which the terminals are located, each user terminal may interfere with transmissions from others (despite nominally occupying a different time or frequency channel) due to errors or spreading in time and frequency.

Furthermore, although radio frequency usage is regulated, the fact that satellite systems cover the whole or a substantial part of the world makes it likely that in at least some areas, the frequencies used on the user link will also be used by terrestrial transmitters, which are therefore, from the point of view of the satellite system, interference generators.

Such interferers may be of several different types, and may be broad band or narrow band; random or repetitive; high power or low power and so on.

EP 0519021 discloses a method of reducing interference between terrestrial and satellite communications systems by controlling the power levels in the terrestrial system.

WO 96/031016 discloses a method of preventing interference between two satellite systems by predicting the zone where interference will occur and inhibiting transmission into that zone by one of the systems.

Our co-pending European application 98309982.1, filed on 4 December 1998 (agent's reference J41085EP), describes a method of interference reduction utilising spatial filtering, where two or more satellites are available, with visibility of the user terminal and interference sources close to it. Our co-pending European application 98310352.4, filed on 16 December 1998 (agent's reference J41086EP), describes another method of interference reduction.

Satellite systems such as that to be operated by the present applicant provide for global visibility of at least two satellites at any point on the Earth at any time of the day. However, other satellite constellations (for example, the "Iridium"™ constellation of Motorola or the Globalstar constellation) can only guarantee single coverage, and there will therefore be times and places when that method cannot be used. Additionally, even where multiple coverage is provided, reception may be blocked by buildings or natural obstacles, reducing the number of available satellites to one at times

It is accordingly an object of the present invention to provide interference mitigation techniques usable from a single satellite (although the invention may be used in conjunction with multiple satellites where available) particularly in the user terminal uplink direction.

The present invention aims to characterise the interference signal by the use or time periods when the signal of interest is either absent, or has some other known value. The interference signals derived in such time periods are then used to form an estimated interference signal which is used to compensate the signal received from the satellite at times when the wanted signal may be present.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 illustrates schematically the beams produced by a satellite in the embodiment of Figure 1;
Figure 5 illustrates schematically the disposition of satellites forming part of Figure 1 in orbits around the Earth;
Figure 6 is a diagram illustrating schematically the geometry of some interference sources;
Figure 7 is a diagram showing schematically the spectral distribution of frequency carriers on a user downlink beam;
Figure 8 is a diagram showing schematically the structure of a TDMA frame on one of the carriers of Figure 6;
Figure 9 is a block diagram showing the structure of interference mitigation apparatus according to a first embodiment;
Figure 10 is a block diagram showing in greater detail part of the structure of Figure 9;
Figure 11 is a block diagram showing the structure of interference mitigation apparatus according to a second embodiment;
Figure 12 is a block diagram showing the structure of interference mitigation apparatus according to a third embodiment; and
Figure 13 is a block diagram showing the structure of a satellite payload apparatus according to a fourth embodiment including interference mitigation apparatus.

### FIRST EMBODIMENT

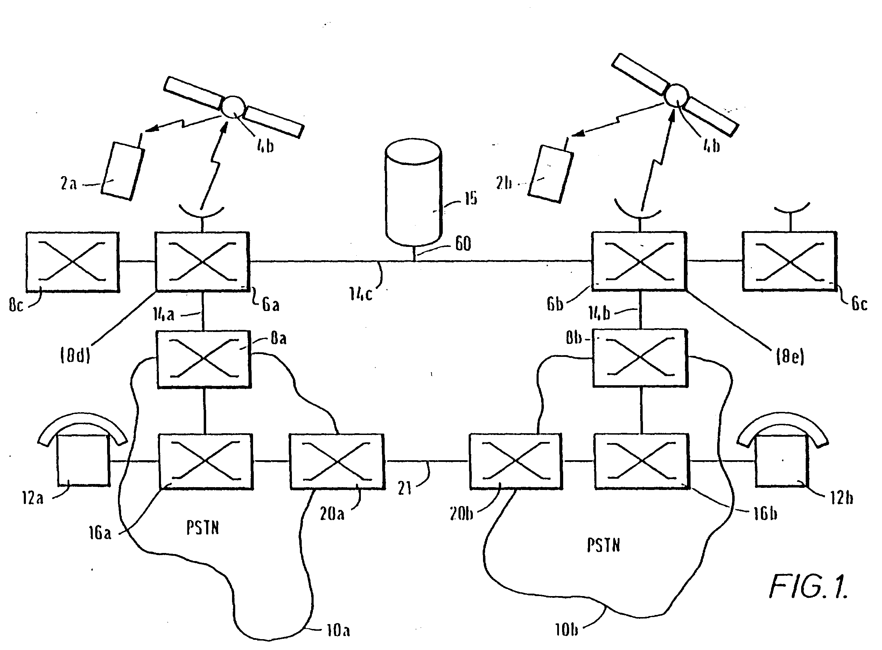

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising channels 14a, 14b, 14c. The satellites 4, Earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transitional links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

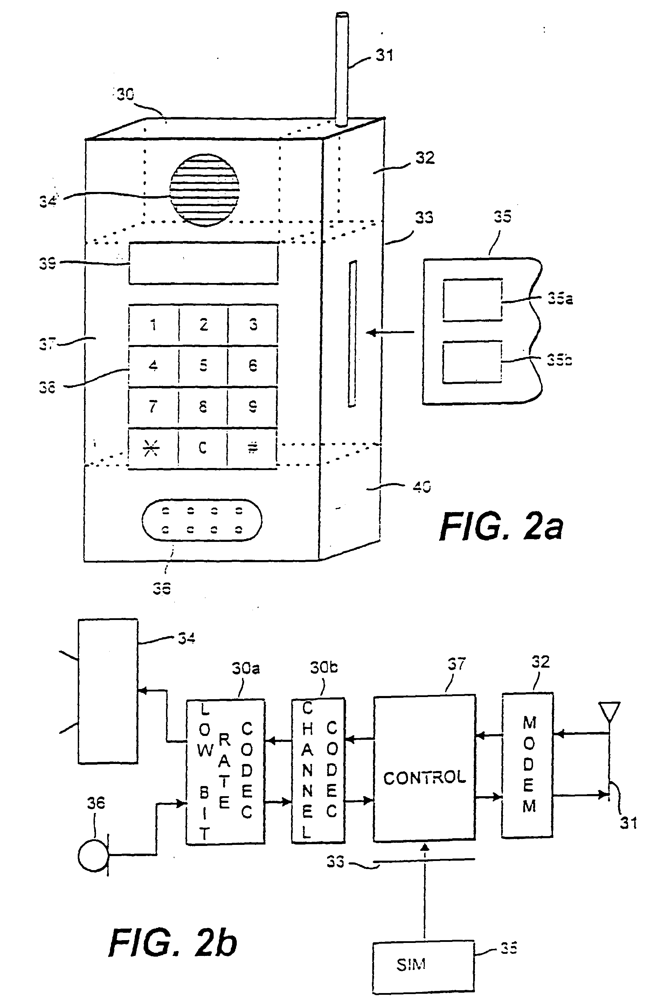

Referring to Figures 2a and 2b, a user terminal equipment 2a of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The SIM memory 35b stores various subscriber identity data including the international mobile subscriber identity (IMSI), which is a unique number associated with that SIM (and hence the subscriber to whom it belongs).

### Earth Station Node 6

The Earth station nodes 6 are arranged for communication with the satellites.

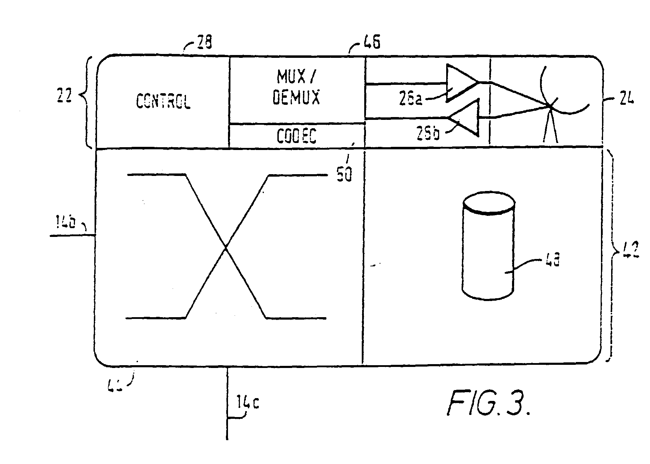

Each Earth station node 6 comprises, as shown in Figure 3, a conventional satellite Earth station 22 (functioning somewhat equivalently to the Base Station of a cellular system) consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemeris data, controlling the steering of the antenna 24, allocating a radio channel, and effecting any control of the satellite 4 that may be required (by signalling via the antenna 24 to the satellite 4).

The Earth station node 6 further comprises a mobile satellite switching centre 42 comprising a network switch 44 connected to the trunk links 14 forming part of the dedicated network. It may be, for example, a commercially available mobile switch centre (MSC) of the type used in digital mobile cellular radio systems such as GSM systems. A multiplexer 46 is arranged to receive switched calls from the switch 44 and multiplex them into a composite signal for supply to the amplifier 26 via a low bit-rate voice codec 50. Finally, the Earth station node 6 comprises a local store 48 storing details of each mobile terminal equipment 2a within the area served by the satellite 4 with which the node 6 is in communication. The local store 48 acts to fulfil the functions of a visited location register (VLR) of a GSM system, and may be based on commercially available GSM products. Alternatively, satellite control data may be transmitted from a separate control station.

The gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch arranged to interconnect incoming PSTN lines from the PSTN 10 with dedicated service lines 14 connected to one or more Earth station nodes 6.

Also provided in the gateway stations 8 is a store for billing, service and other information relating to those mobile terminals 2 for which the gateway station 8 is the home gateway station.

The database station 15 comprises a digital data store which contains, for every subscriber terminal apparatus 2, a record showing the identity (e.g. the International Mobile Subscriber Identity or IMSI) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and calculate the rough terrestrial position of the mobile terminal apparatus 2 using the differential arrival times and/or Doppler shifts in the received signal, and knowledge of which beams of which satellites 4 the signal was received through. The position is then stored in the database 48.

### Satellites 4

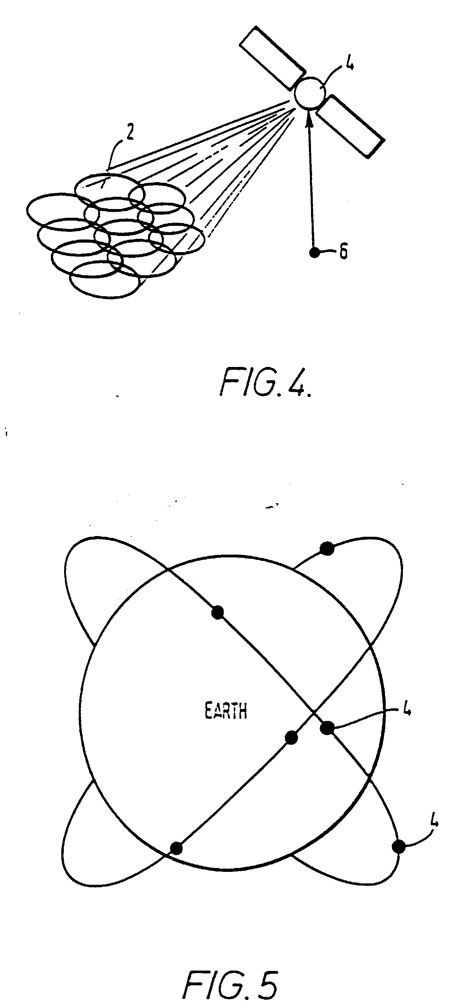

The satellites 4a, 4b comprise generally conventional communications satellites such as the HS601 available from Hughes Aerospace Corp. California, US with a communications payload, which may be as disclosed in GB 2288913. Each satellite 4 is arranged to generate an array (typically hexagonal) of beams covering a footprint beneath the satellite, each beam including a number of different frequency channels and time slots, as described in GB 2293725 and illustrated in Figure 4.

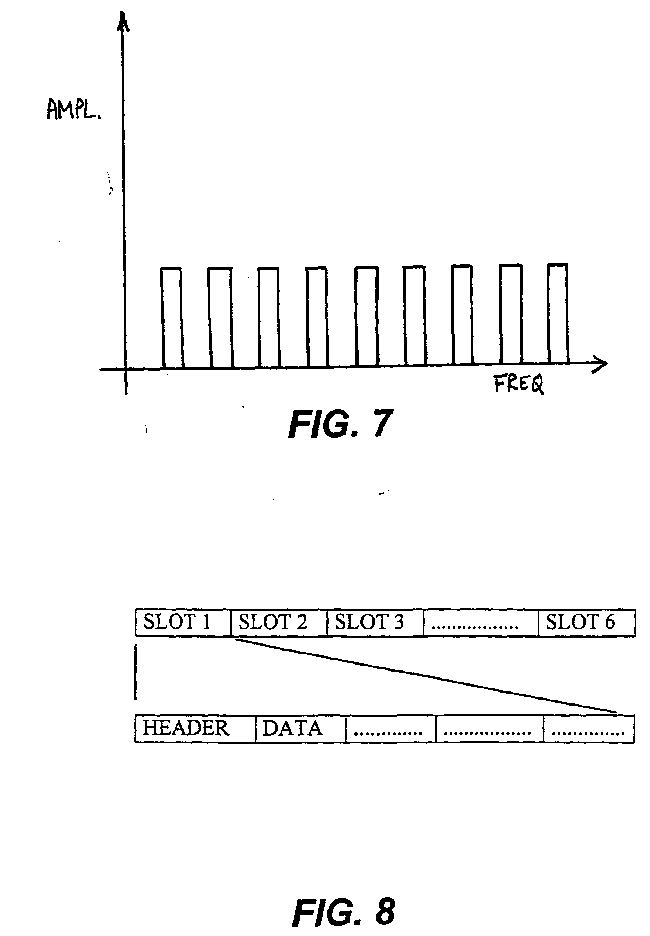

On each beam, the satellite therefore transmits a set of user downlink frequencies as shown in Figure 7. The frequencies are separated by a frequency guard band. The downlink frequencies on adjacent beams are different, so as to permit frequency re-use between beams. Each beam therefore acts somewhat in the manner of a cell of a conventional terrestrial cellular system. For example, there may be 61, 121 or 163 beams. The frequencies are allocated between satellites such that within each plane, neighbouring satellites use different frequencies at those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, referring to Figure 8, each uplink and downlink frequency carries a plurality (e.g. 6) of time division channels, so that each mobile terminal 2 communicates on a channel comprising a given time slot in a given uplink and downlink frequency. The time slots are separated by a short guard interval.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at around 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The position of each satellite is known to a high degree of accuracy, using Earth based observations and/or by the use of a global positioning system (GPS) receiver in each satellite 4. The movement of each satellite, defined by the parameters of its orbit (the ephemeris) therefore enables each Earth station node 6 to know where the satellite is, and where it will be in future.

From a knowledge of the shape of the Earth (the polar and equatorial radii, for example) and the satellite orbits, the satellite Earth station node 6 can calculate position data of a transmitting source from its signal propagation delay and its Doppler shift in the uplink signal.

The satellites 4a are ranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, about 10,500 kilometres (6 hour orbits) and equatorial inclinations of 45°, as shown in Figure 5. Equally, however, larger numbers of lower satellites may be used, as disclosed in EP 0365885, or other publications relating to the Iridium system, for example.

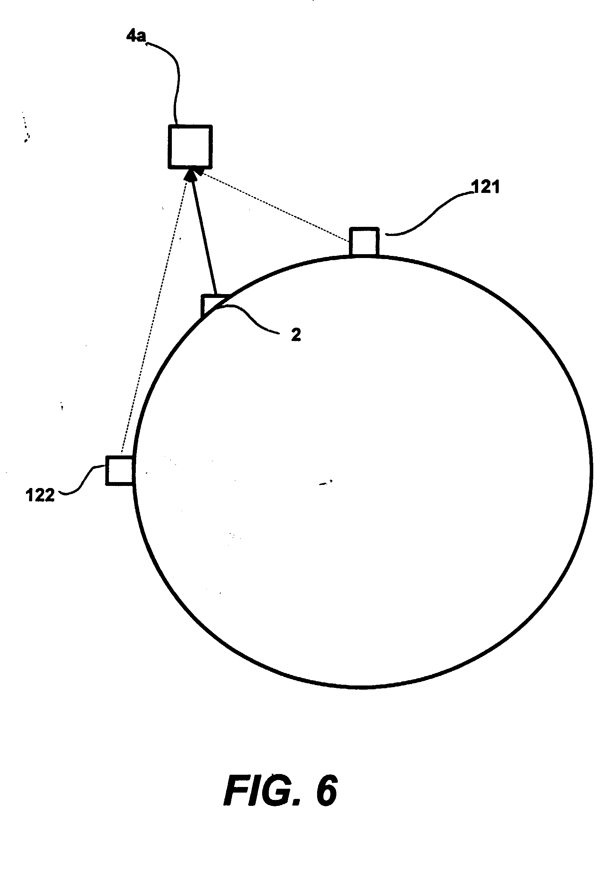

Referring to Figure 6, the effects of two interferers 122, 121 are shown on a system comprising a mobile terminal 2 and a satellite 4. The interferers may be, for example, television broadcasting stations, terrestrial mobile communications base stations; terrestrial fixed link microwave repeaters; or terrestrial mobile communications terminal equipment. In general, a priori knowledge of the position of at least some of the interferers 121, 122 is not available.

Each of the satellites 4 is moving overhead with a substantial velocity over the ground

Thus, the signal which is supplied on the feeder downlink from the satellite 4 to the Earth station 6 is made up of a component signal from the user terminal 2, a component signal from the interferer 121, a component signal from the interferer 122, component signals from other user terminals or interferers, and background noise; each differently delayed and with different Doppler shifts.

### FIRST EMBODIMENT

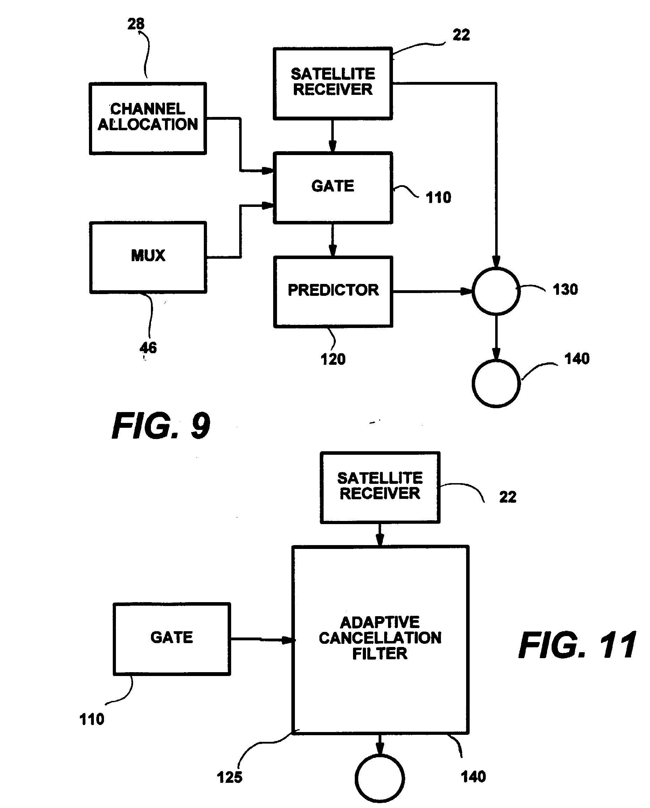

Referring to Figure 9, interference mitigation apparatus of this embodiment is provided at the Earth station 6. The interference mitigation apparatus comprises a gate circuit 110, connected to the satellite receiver 22, the multiplexer 46 and the channel allocation unit 28. The gate 110 is operable to pass signals from the satellite receiver 22 to a predictor 120, and is opened to do so under control of the channel allocation and multiplexer units 28, 46.

As will be explained in greater detail, the gate 110 is opened at times when no signal from a user terminal 2 is present, and its output during periods when it is open therefore represents interference and noise signals. The predictor 120 utilises these to generate a representation of the interference, which is subtracted from the satellite receiver 22 signal at a subtractor 130, the interference-compensated signal being supplied to an output port 140.

There are a number of different periods when no user terminal signal will be present in the signal from the satellite receiver 22. Firstly, there may be transition periods between each symbol (i.e. bit). Secondly, there are guard periods in between each TDMA time slot. These periods are always present.

Thirdly, unless the satellite is fully loaded, there will be spare TDMA time slots within each frame, corresponding to unused channels.

Fourthly, in this embodiment, time slots are intentionally left vacant to permit the phase locked loop at the user terminal and/or the satellite to re-tune from one frequency to another (e.g. from transmission to reception).

During all these periods, there should no transmission from the user terminal to the satellite. These periods occur at times which are precisely in synchronism with the corresponding times of transmission from the Earth station 6 and, accordingly, the multiplexer 46 employed in the Earth station 6 is used to synchronise the opening and closing times of the gate 110, and the channel allocation unit 28 is used to determine which time slots (if any) are unused and to open and close the gate 110 during those time slots.

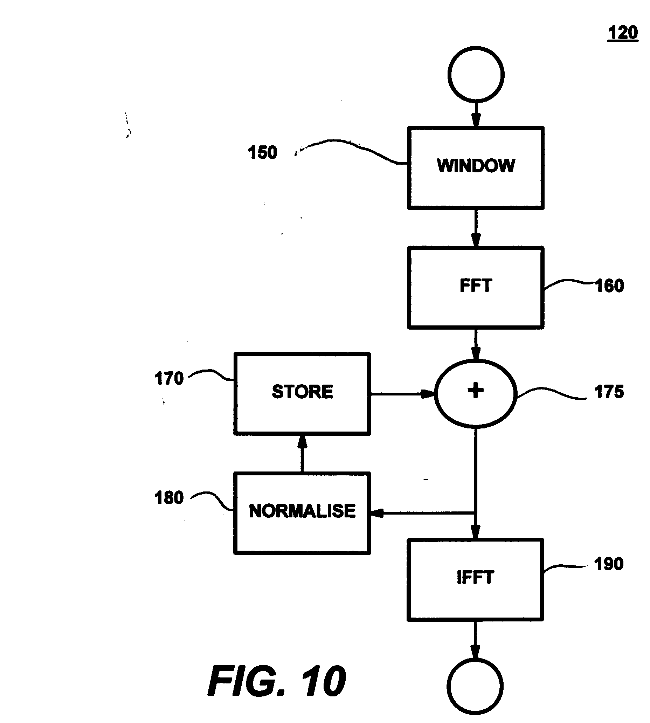

Referring to Figure 10, in this embodiment, the predictor 120 comprises a spectral transform unit 160, such as a digital signal processor device arranged to execute a spectral transform such as the fast Fourier transform (FFT) and a similar inverse transformer 190 arranged to execute the reverse transform (such as the inverse fast Fourier transform or IFFT). Preferably, a windowing unit 150 is provided to reduce the effects the discontinuous sampling by applying a window such as a Hanning window.

A store 170 stores an average spectral representation of the signal, built up over the course of one frame. The averaged spectrum stored in the store is added, coefficient by coefficient, to the corresponding coefficients of the most recently derived spectrum, and the result is fed to the inverse transformer 190 which generates therefrom a time domain signal which is supplied at an output port of the predictor 120 as the current interference estimate. The time domain signal is maintained until the next spectrum analysis is performed.

The sum of the previous stored spectrum and the analysed spectrum, generated at an adder node 175, is then scaled by a scaling factor and fed back into the spectrum average store 170. The scaling factor is selected so as to balance the contributions of the new spectrum and the preceding spectra. It may, for example, be larger for longer time periods of spectral analysis, during which the derived spectrum may be expected to be more representative.

In operation, then, in this embodiment, on each frequency channel of each beam of each satellite, the gate 110 passes signals from the satellite to the predictor 120 during unused time slots and during guard intervals. These are used to maintain a running average of the interference signal when the wanted signal is not present, which average is used as an estimated interference signal and subtracted from the wanted signal.

Rather than maintaining a stored average, it would be possible to store the spectrum from the last unused time slot for use on subsequently received satellite downlink signals until the next unused timeslot.

### SECOND EMBODIMENT

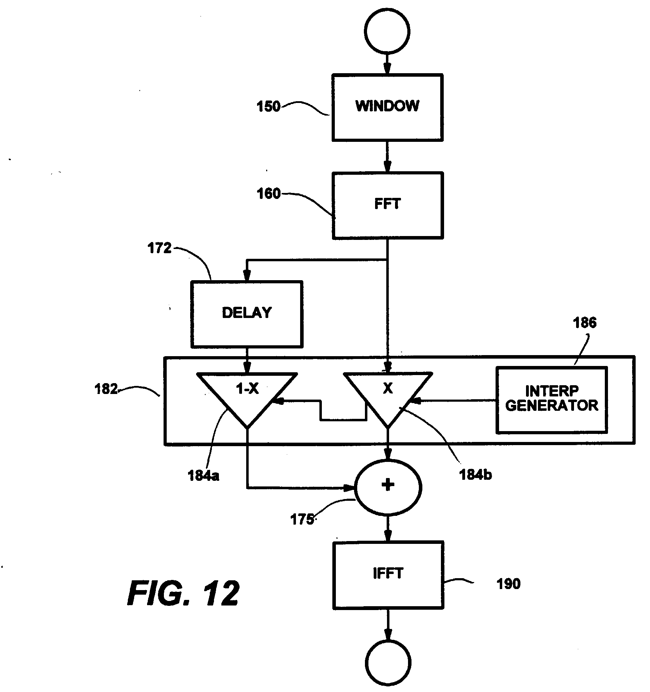

Referring to Figure 11, in this embodiment, the gate circuit 110 of the first embodiment enables and disables adaptation of an adaptive cancellation filter 125, which filters the signal from the satellite receiver 22 to supply an output to the output port 140.

Whilst the adaptation is enabled, the adaptive filter 125 operates to adapt its filter coefficients to reduce its output as close to zero as possible, using well-known gradient descent adaptive techniques, or by directly calculating a spectral inverse filter using Liner Predictive Coding (LPC) or similar techniques.

The filter is thus adapted to filter out those signals present when the wanted signal is absent.

When the wanted signal is present, the gate circuit 110 disables the adaptation of the filter 125, which therefore continues to filter the satellite downlink signal to reduce the level of interference in it.

In this embodiment, it would be possible to make the cancellation filter depend also upon a stored representation of the air interface spectrum of the signals from the user terminals, to provide an interference mitigation filter which better separates the signal and the interference.

### THIRD EMBODIMENT

This embodiment is based on the first, and like parts are not discussed further. In this embodiment, referring to Figure 12 (which replaces Figure 10 in this embodiment), the interference mitigation circuit operates to delay the signal from the satellite receiver 22 for one frame, and to interpolate interference spectra throughout that frame from the unused timeslots before and alter that frame.

For example, there may be one unused time slot in each TDMA frame of six slots. The five slots containing wanted signal alter the unused slot are not demodulated until alter the next unused time slot. A delay stage (not shown) for delaying the wanted signal by a suitable number of time slots is provided.

To take account of spectral changes in this embodiment, each interference sample is, after being transformed by the spectral transformer 160 as in the first embodiment, fed to a store 172 (shown as a delay stage).

The output of the store 172 is therefore the interference spectrum from the preceding unused time slot. This, together with the current output of the transformer 160 (i.e. that representing the current unused time slot) are fed to an interpolator 182 comprising a pair of multipliers 184a, 184b fed from an interpolation counter 186.

Over the sampling intervals of the wanted signal time slots, the interpolation counter 186 generates a linear ramp of values of a scaling factor X, starting at zero at the beginning of the first wanted time slot and finishing at unity at the end of the last wanted time slot. A first multiplier 184b, fed from the output of the spectral transformer, multiples by the scaling factor X and a second 184a, fed from the delay store, multiples by a scaling factor 1-X, these being controlled by the interpolation generator 186.

Thus, during the wanted time periods, the interpolator 182 acts to blend the interference spectrum prior to the wanted time period with that after the wanted time period.

Whilst this embodiment has been described by reference to the use of vacant time slots for interference measurement, it will be apparent that the same principle could be applied by using the guard intervals between bursts of data as discussed above.

### FOURTH EMBODIMENT

This embodiment is based upon the second, and like parts are not discussed further. In this embodiment, in addition to the use of signals from the guard intervals and from an unused time slot provided in each frame, as discussed above, signals are also used from periods when it is known what will be transmitted by the user terminal.

In addition to the above described times at which substantially no signal from the user terminal is present, there are a number of times at which the signal transmitted from the user terminal is known. Such times are, for example, times at which the user terminal must transmit a training or synchronisation sequence of bits, which sequences known to the Earth station 6, or where the user terminal must make a response to a particular signal transmitted by the Earth station 6.

In this embodiment, the modulation scheme employed is such that, between each symbol, there is a transition through a known amplitude and phase state (such as zero amplitude). The gate circuit 110 is, in this embodiment, also arranged to pass the downlink signals at these inter symbol intervals, the timing of which is determined by the above mentioned correlation operation.

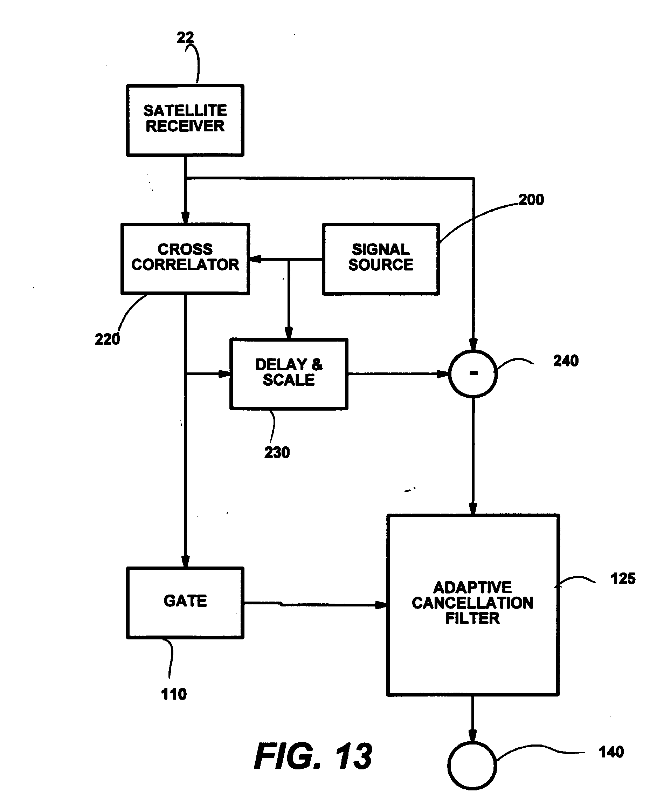

Referring to Figure 13, a signal source 200 is provided, which receives from the Earth station multiplexer 46 a model of the signal transmitted from each user terminal during the initial part of each time slot, when the user terminal 2 is transmitting training bit for synchronisation; and at accurately time-aligned periods corresponding to inter-symbol intervals.

This signal is periodically correlated with the output of the satellite receiver 22a by a cross-correlator 220, to determine the amplitude and phase of the user terminal transmissions within the signal including interference components, relative to the signal model. The locally generated model of user terminal transmissions is then scaled and delayed by a delay line and multiplier 230, during each time slot, by an amount appropriate to the measured amplitude and phase for each user terminal, and subtracted from the satellite signal at a subtraction node 240. The residuum thus formed therefore represents the interference present during the transmission of the known data, which is used to train the adaptive filter 125. All the above-recited elements may be provided by a suitably programmed Digital Signal Processor (DSP) device.

### FIFTH EMBODIMENT

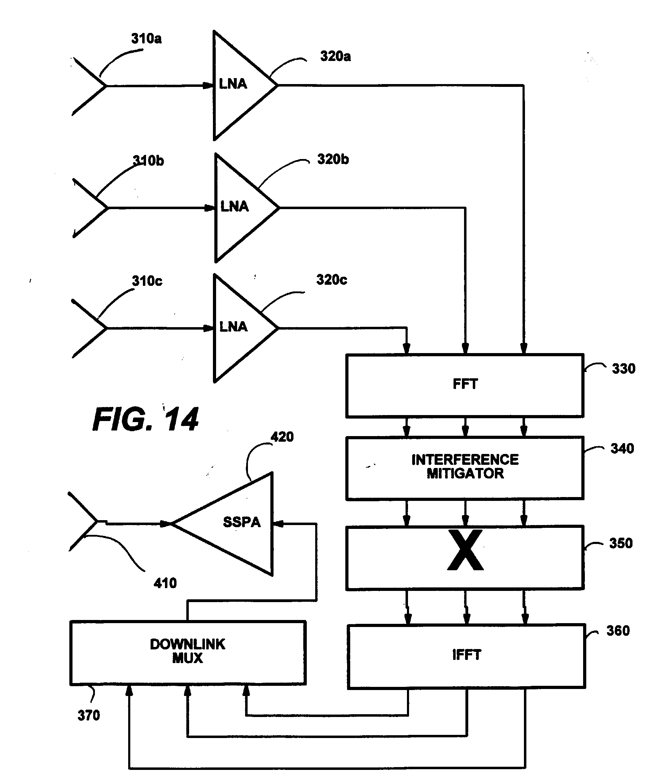

As shown in Figure 14, in this embodiment, the satellite regenerative repeater includes array elements 310a-310c (in practice, several hundred array elements in a regularly spaced array are provided) of a user uplink array antenna; and a feeder link antenna 410 for communication with the earth station node 6. The user uplink signal is amplified at some stage by Low Noise Amplifiers 320a-320c, and the feeder downlink signal is amplified for transmission by a Solid State Power Amplifier 420. At some stage, frequency translation (e.g. between S and C bands) is performed, preferably via an intermediate frequency at which some or all amplification may take place.

Also provided are a Fourier transform 330 and inverse transform 360 stages, for beamforming in known fashion. A router 350 routes each user uplink frequency channel from each beam onto a uniquely corresponding frequency channel in the feeder downlink, these being multiplexed together by a frequency multiplexer 420.

Accordingly, since Fourier transform and inverse transform stages are already provided, rather than providing a separate Fourier transformer and inverse transformer at the Earth station 6 as in the preceding embodiments, each satellite further includes an interference mitigation processor 340 arranged to measure the spectrum at periods when user terminal signals are either absent or of known value, and to generate an estimated interference signal, which is subtracted at the satellite from the transformed received signal before the later is reverse transformed back into the domain for transmission down to the earth station.

Alternatively, in the manner of the second or fourth embodiments, this mitigation may be performed by filtering, conveniently by taking a Fourier spectrum during vacant time slots or other periods when wanted signals are absent. Each Fourier signal component in the signal from the satellite is then divided by the corresponding component of the interference spectrum. This provides a filter which filters the signal received at the satellite by a filter having the inverse spectral response to that of the interference.

### OTHER EMBODIMENTS

It will be clear from the foregoing that the above described embodiment is merely one way of putting the invention into effect. Many other alternatives will be apparent to the skilled person and are within the scope of the present invention.

For example, the features of the above-described two embodiments may be combined with each other, or with the embodiments of our above-referenced co-pending applications of 4 December 1998 or 16 December 1998 (the contents of which are incorporated herein by reference).

One or more interferors may be user terminal signals themselves, in which case each is processed to mitigate interference by the other.

A database of interference source spectra and their positions on Earth may be derived from other sources, such as a spare satellite (as described in our earlier European application EP 0858176). The stored spectra therefrom may assist in spectral identification and subtraction or filtering as described herein.

Spectral transforms other than the Fourier transform (e.g. the Discrete Cosine Transform) could be used. Equally, other representations of signal amplitude, frequency and phase could be employed.

Rather than transmitting a known bit sequence, a pilot tone (e.g. a single frequency) could be transmitted by the user terminal.

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of mitigating interference in a satellite user uplink signal of a satellite mobile communications system comprising:
providing a plurality of first periods within which the user terminal transmissions are in predetermined states;
measuring said uplink signal during said periods; and
using said measurements from said first periods to mitigate said interference during second periods within which the user terminal transmissions are not in said predetermined states.

2. A method according to claim 1 in which said signal uses time division multiplexing with a repeated sequence of timeslots, and said first periods comprise unallocated said timeslots.

3. A method according to claim 1 or 2, in which said states comprise a state in which said user terminal is not transmitting.

4. A method according to any of claims 1 to 3, in which said states comprise a state in which said user terminal is transmitting a predetermined signal sequence.

5. A method according to any preceding claim, in which said user terminal is arranged to modulate a sequence of symbols using a modulation which passes through a transition state between symbols, and said predetermined states include said transition state.

6. A method according to any preceding claim, in which said using step comprises the steps of:
deriving an estimated interference signal; and
subtracting said estimated interference symbol from a signal derived from said user uplink signal.

7. A method according to claim 6, comprising the steps of:
estimating the spectrum of said estimated interference signal; and
subtracting said spectrum from that of said user uplink signal.

8. A method according to claims 1 to 5, in which said using steps comprises the steps of:
deriving a filter which reduces the level of the user downlink signal during said first periods, and
filtering a signal derived from said user downlink signal with said filter during said second periods.

9. A method according to claim 8, in which the response of said filter approximates the spectral inverse of said user uplink signal during said first periods.

10. Apparatus for mitigating interference of a user uplink signal in a satellite mobile communication system, comprising means for performing the method of any preceding claim.

11. A satellite payload including apparatus according to claim 10.

12. Apparatus according to claim 10 arranged to communicate with a terrestrial station (6) of said network.
